Europäisches Patentamt

European Patent Office

Office européen des brevets

(19)

(11) Publication number: **0 418 041 A2**

## EUROPEAN PATENT APPLICATION

(21) Application number: 90309957.0

(22) Date of filing: 11.09.90

(51) Int. Cl.5: **B23D 77/00**

(30) Priority: 12.09.89 CS 5263/89

(43) Date of publication of application:
20.03.91 Bulletin 91/12

(84) Designated Contracting States:
CH DE FR GB IT LI

(71) Applicant: Fiala, Stanislav
J.Faimonove 2
Brno(CS)

Applicant: Dvoracek, Jaroslav
Zitna 21
Brno(CS)

Applicant: Dvoracek, Jan
Bozetechova 67
Brno(CS)

(72) Inventor: Fiala, Stanislav
J.Faimonove 2
Brno(CS)
Inventor: Dvoracek, Jaroslav
Zitna 21
Brno(CS)
Inventor: Dvoracek, Jan
Bozetechova 67
Brno(CS)

(74) Representative: Godwin, Edgar James et al
MARKS & CLERK 57-60 Lincoln's Inn Fields
London, WC2A 3LS(GB)

(54) Tool unit, in particular for finishing operations of cutting machining.

(57) The tool unit consists of clamping part (1) for driving connection with a machine tool, and a cutting part (7) including the actual cutting tool (11). In a transition zone between the clamping and cutting parts (1,7) there is an adjustably axially deformable element (5). The axial distance between the clamping and cutting parts (1,7) in at least three places around their circumference is adjustably settable by force means (23), for example adjusting screws (24). The tool unit may be used in machine tools with rotating tool and with rotating workpiece.

FIG.4

EP 0 418 041 A2

# TOOL UNIT, IN PARTICULAR FOR FINISHING OPERATIONS OF CUTTING MACHINING

The invention relates to a tool unit, particularly but not solely for finishing operations of cutting machining, the unit having a clamping part for driving connection with a machine tool and a cutting part including a cutting tool with at least three cutting edges distributed around a circle, for example a reamer, while the cutting part is arranged adjustably swingably with regard to the clamping part.

In common workshop practice, finishing operations of cutting precise openings with precise spacings are performed either by a boring bar or by reamers for coordinates drilling machines.

Among the disadvantages of boring bars is especially a relatively low productivity because a precise hole is cut only by one cutting edge, leading to a relatively short service life of that cutting edge. Another disadvantage is the depth limit of a precise hole due to the deflection of the boring bar in case of larger overhang of the cutting edge, which disadvantageously influences geometrical precision of the hole.

Higher productivity, especially in piece production or small lot production and also in cutting precise holes of larger depths can be obtained by finishing the holes by reamers for coordinates drilling machines, i.e. reamers which cut the machined material by cutting edges on the front of the cutting part of the tool. After clamping into the spindle of the machine tool, the reamer must rotate with high precision as to radial run-out of cutting edges to finish the hole in precise dimension and position. For this reason it is necessary to produce the tool within very close tolerances, especially the shank with regard to the cutting part and to use it in the machine with a high precision of clamping part of the spindle, such as for example a coordinates drilling machine. Because of said high requirements both on the production of the reamer and on actual machine tool, the use of such reamers is considerably limited.

Wider use of such a reamer is enabled by CS Author's Certificate 224,660, the feature of which is that it consists of a clamping head body provided with a clamping cavity, one part of which is arranged for driving connection with the shank of a working tool, while the other part is arranged for free location of the shank of the working tool, while on the body of the clamping head there is a radially movable adjusting bush surrounding at least a part of the circumfeence of the cutting tool shank. Around the circumference of the clamping head body there are at least three adjusting screws regularly distributed and radially arranged for contact with the adjusting bush. Between the outer surface of the adjusting bush and the wall of the clamping head body there is a layer of flexible mass. In the clamping head body there is arranged at least one driving element located transverse to the axis of the cutting tool shank and reaching into the clamping cavity in the clamping head body.

Among the disadvantages of this arrangement is a relatively small angular extent of approximately 5° to turn the regulating screws when adjusting the clamping head by progressive tightening of said screws.

Another disadvantage is the necessary precision in the production of especially the tool shank, clamping part of the head cavity, and spacing of the adjusting screws both in the head body and on the radially movable bush.

The clamping head is suitable for reamers for coordinates drilling machines of smaller and medium diameters up to approximately 60 mm depending on the tool overhang both in the said drilling machines and in precise milling machines and in NC machining centres, but it does not enable one to spread the use of reamers for coordinates drilling machines of larger diameter than stated, especially because it does not enable one to adjust radial run-out and also axial run-out of the tool cutting part given on the one hand by production deviations in the clamping head-tool assembly and on the other hand by the deviations of axial positions of the cutting edges of the tool created during radial adjustment. For the same reason the use of the clamping head is practically impossible in machine tools where the workpiece rotates.

Another disadvantage is, first of all with regard to minimum flexibility of the adjusted head, the limits in the use of the head when using machine reamers, i.e. reamers with a bevel on the cutting edges created to facilitate leading of the reamer into the pre-drilled hole and to achieve higher quality of machined surface. The use of the head is then limited on the cases where there is a guarantee of high precision of coaxiality of the reamer axis of rotation and of the pre-drilled hole. In case of not maintaining this condition, considerable worsening of reaming precision and quick wear of the reamer take place.

In a tool unit according to the present invention, particularly for finishing operations of cutting machining, between a clamping part and a cutting part there is in a transition zone an adjustably axially deformable element, while axial distance between the clamping part and the cutting part is in at least three places around their circumference adjustable by force means.

A preferred feature is that in the transition zone on the clamping part and on the cutting part there are mutually assigned flange members. Another preferred feature is also that on at least one flange member there is a circumferential recess. A preferred feature is also that on at least one flange member there is a face recess. Another preferred feature is that, in the transition zone, between the flange members there is a flexible insert as an axially deformable element, e.g. a Belleville spring, while the flange members are connected by traction adjusting screws. Another preferred feature is that in the face of one of the flange members there is a centering opening to locate a centering pin which is arranged on the other flange member. Another preferred feature is also that in one flange member with an axially deformable element there is an axially fixed adjusting plate, which is radially adjustable on the other flange member. Another preferred feature is that one flange member comprises a flexible plate connected on its circumference with an axially deformable element being arranged radially fixed with regard to the other flange member.

A tool unit according to the invention can provide a number of advantages. Particularly, it can enable precise adjustment of the cutting part (cutting tool) with a sufficient limitation of the run-out of rotating cutting edges of the tool, or of the run-out of a rotating workpiece with regard to the cutting edges.

When adjusting the run-out on this tool unit there is an advantageous relation between the change of action of the adjusting force means and the change of the tool run-out, what is especially suitable in case of eventual use of automatic means of adjustment.

Another disadvantage is adjustable rigidity of the cutting tool adjustment, which is especially suitable when a machine reamer is used.

Another advantage is the possibility of adjustment in two zones enabling compensation of radial and axial run-out of the cutting part or cutting tool, or compensation of radial run-out of an axially moved cutting part.

Other possible advantages of the tool unit according to the invention include design variability, enabling modified unit-construction with easier adaptation to the conditions given by technology and machine equipment.

The tool unit is simple in its design and not demanding as to the technology and production.

The invention will be described further, by way of example, with reference to the accompanying drawings, in which:

Figure 1 shows a first embodiment of a tool unit for finishing operations of cutting machining, in partial longitudinal section;

Figure 2 shows a second embodiment in partial longitudinal section;

Figure 3 shows a third embodiment in partial longitudinal section;

Figure 4 shows a fourth embodiment in partial longitudinal section;

Figure 5 shows a fifth embodiment in partial longitudinal section; and

Figure 6 shows a sixth embodiment in longitudinal section.

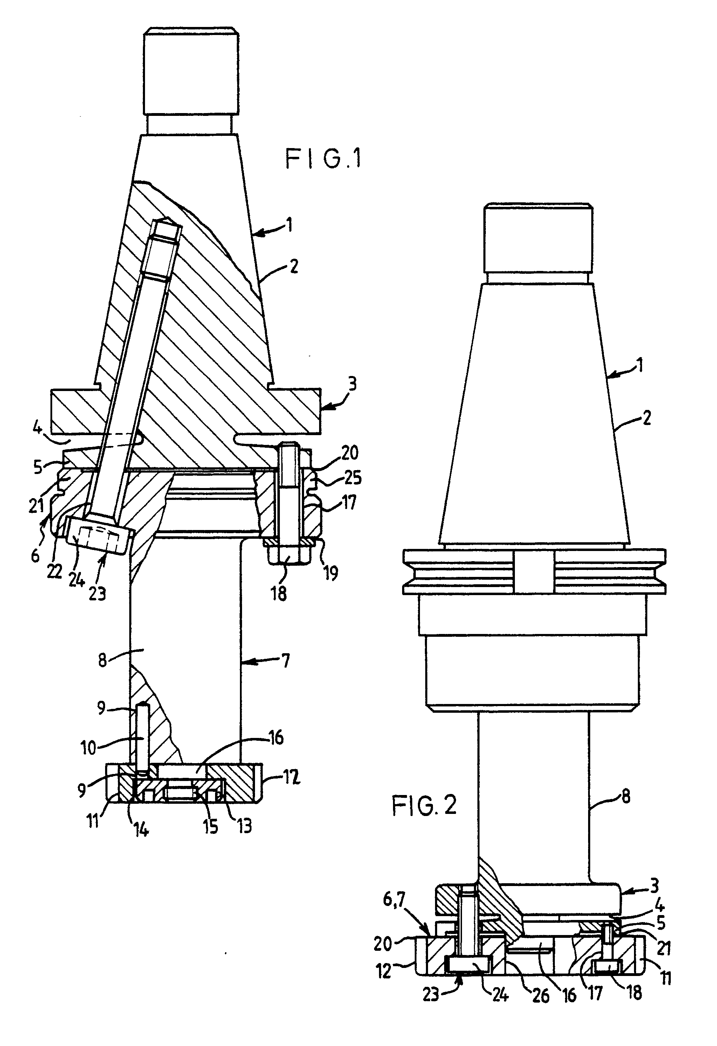

The tool unit is fixed in a spindle (not shown) of a machine tool, for example of a coordinates borer, consisting of a stand, a clamping table, and a driving unit provided with the spindle. The tool unit illustrated in Figure 1 consists of a clamping part 1, provided for example with a fixing cone 2 having an internal fixing thread for driving connection with the spindle. Under the fixing cone 2 the clamping part 1 has a flange member 3 with a circumferential recess 4 defining an adjustably axially deformable element 5 which abuts against a flange member 6 which is part of a cutting part 7. The flange member 6 is integrally connected to a neck 8 in which there is a positioning opening 9 with a positioning pin 10 reaching into a positioning opening 9 in a cutting tool 11, provided with at least three cutting edges 12 distributed around a circle, fixed by a nut 13 held in a cavity 14 by means of a thread 15 formed on a fixing pin 16 of the neck 8.

At least three through-openings 17 pass parallel with the axis of the neck 8 through the flange member 6 of the cutting part 7. At least three flange screws 18 pass through the openings 17 and are advantageously provided with spring washers 19 for correct adjustment of the prestress and tightening of the threaded part of the flange member 6 to the axially deformable element 5 which is by its centre connected with the flange member 3 of the clamping part 1. To ensure better planeness and deformability of the deformable element 5 it is suitable to make a circumferential protrusion 21 on the contact surface 20 of the flange member 6. Through the flange member 6 of the cutting part 7 pass at least three through-openings 22 whose axes are at an angle within the range $45°\text{-}0°$ relative to the axis of the tool unit; while in the embodiment according to Figure 1, the opening 22 is illustrated at an angle of $16°$, the most suitable angle is usually $0°$. The openings 22 also pass through the transition zone in which there is the axially deformable element 5 through which freely pass in the openings 22 adjustably settable force means 23, which are (by way of example) traction screws 24 whose heads are advantageously countersunk in the flange member 6. Each traction screw 24 is engaged in a threaded seat in the clamping part 1. The adjustably settable force means 23 may of course be made instead as compression means, for example as compression screws located by a threaded connection in the flange member 6 of the cutting part 7 and bearing against the flange member 3 of the clamping part 1, for example via balls or rollers. At the same time the circumference of the flange member 6 of the cutting part 7 is advantageously provided with a measuring surface 25.

Figure 2 illustrates a tool unit having a clamping part 1 with a clamping cone 2 with an internal fixing thread for driving connection with a spindle. The cone 2 is connected with a neck 8 which has a flange member 3 with a circumferential recess 4, thus forming an adjustable axially deformable element 5. The element 5 abuts against a flange member 6 which is in this case the actual cutting tool 11 with cutting edges 12 and a positioning opening 26 located on a fixing pin 16 which is a part of the clamping part 1. At least three through-openings 17 pass through the flange member 6 and receive screws 18 screwed by their threaded parts in the axially deformable element 5. A contact surface 20, for example on the axially deformable element 5, is provided with a circumferential protrusion 21. At least three through-openings 22 pass through the flange member 6, and also through the axially deformable element 5, and at least three adjustably settable force means 23 (traction screws 24) are located in them; the heads of the screws 24 are advantageously countersunk and their threaded seat is in the flange member 3 of the clamping part 1.

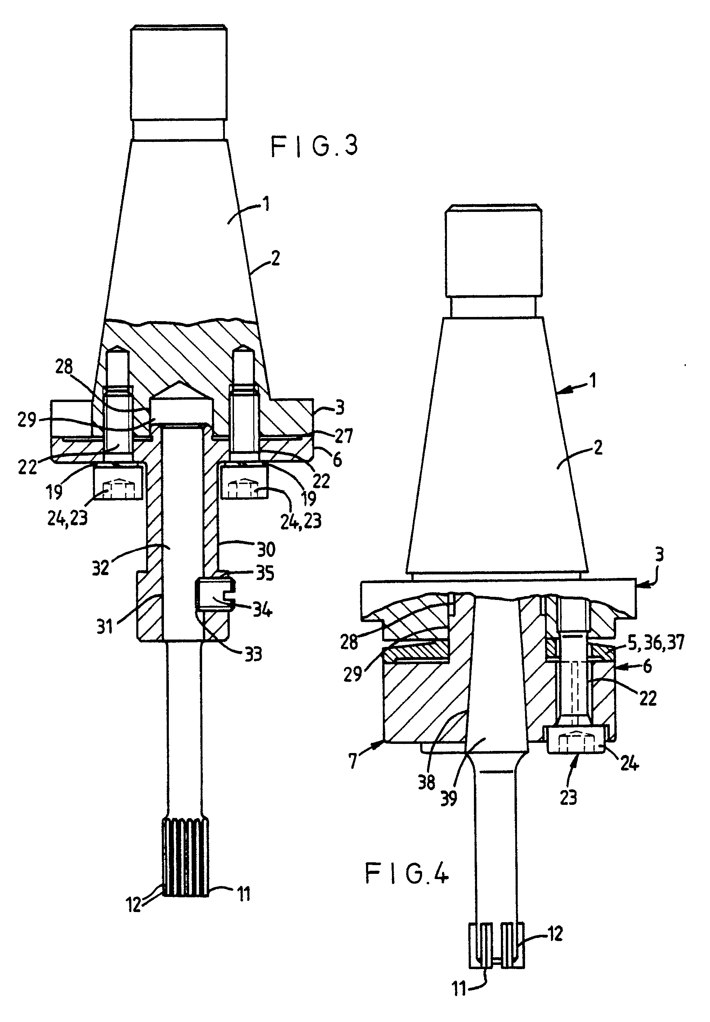

Another embodiment illustrated in Figure 3 is a tool unit consisting of clamping part 1 in which there is a fixing cone 2 and in the upper part there is an internal fixing thread for driving connection with a spindle. Under the fixing cone 2 there is a flange member 3 on clamping part 1. A flange member 6 of a cutting part 7 abuts against it and is provided with a face recess 27 created so that the thinned wall of the flange member 6 forms an axially deformable element. The flange member 6 has at least three through-openings 22 through which pass at least three adjustably settable force means 23, by way of example traction screws 24, the threaded seat of each traction screw 24 being in the clamping part 1. A centering opening 28 in the clamping part 1 in the face of the flange member 3 serves for easy basic adjustment. A centering pin 29 protruding from the face of the flange member 6 of the cutting part 7 is located in the centering opening 28. The flange member 6 is extended downwards as a tool holder 30 for example with a cylindrical clamping cavity 31 into which is put a cylindrical shank 32 of a cutting tool 11, for example a front reamer with cutting edges 12 the positioning of which with regard to traction screws 24 is done by means of adjusting surface 33 which is in mesh with adjusting screw 34 in radial opening 35 in the tool holder 30. Spring washers 19 are placed under the heads of traction screws 24 for easier adjustment by minimum moment of the screws 24.

Figure 4 shows a tool unit comprising a clamping part 1 on which there is a fixing cone 2 having in the upper part an internal fixing thread for driving connection with a spindle. Under the fixing cone 2 on the clamping part 1 there is a flange member 3 of the clamping part 3. The face of the flange member 3 is provided with a centering opening 28 into which is put a centering pin 29 protruding from the face of a flange member 6 of a cutting part 7. An adjustable axially deformable element 5 constituted by a spring washer 36, for example a Belleville spring 37, is shiftably placed on the centering pin 29. In the flange member 6 of the cutting part 7 is a conical clamping cavity 38 which receives a conical shank 39 of a cutting tool 11, for example a front reamer with cutting edges 12. The flange member 6 of the cutting part 7 and the spring washer 36 (Belleville spring 37) are provided with at least three through-openings 22, through which pass at least three adjustably settable force means 23 (traction screws 24). Their heads are advantageously countersunk in the flange member 6 and the thread seat of each traction screw 24 is in the clamping part 1.

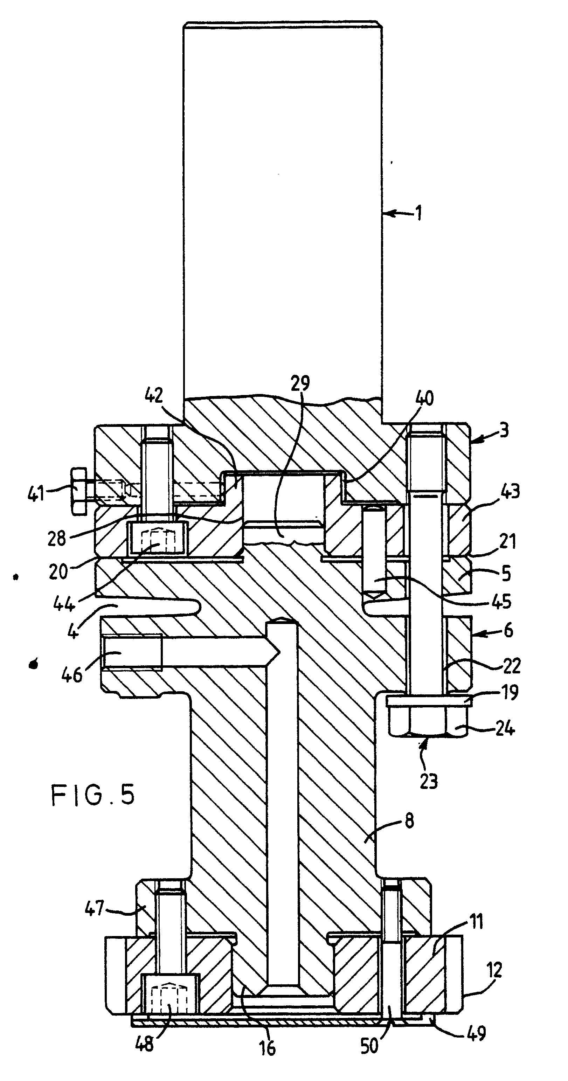

A further possible embodiment is illustrated in Figure 5, where there is an embodiment of a tool unit especially for turret NC lathes, where the tool unit is fixed in a turret holder placed together with the support on the frame of the lathe ending in a driving unit with a head-stock with a clamping chuck for the workpiece. The tool unit is fixed by a cylindrical clamping part 1 in the turret holder, while its end is made as a flange member 3 whose face is provided with a centering opening 40 into which reach at least three radial centering screws 41 bearing by their end faces against a centering projection 42 of a radially adjusting plate 43 fixed by at least three fixing screws 44. In the centre of the adjusting plate 43 there is a centering opening 28 into which reaches a centering pin 29 formed on the face of a flange member 6 of a cutting part 7. The flange member 6 is provided with a circumferential recess 4 so that an adjustable axially deformable element 5 is created, advantageously with a circumferential protrusion 21 which abuts against adjusting plate 43. For better transfer of torsional moment from the cutting part 7 to the clamping part 1, the axially deformable element 5 is connected by a driving pin 45 with the adjusting plate 43. Through the flange member 6 and a neck 8 of the cutting part 7 passes a channel 46 for cooling liquid, the input of which is on the flange member 6 and the output in a fixing pin 16 formed on the front of a flange 47. A cutting tool 11 with cutting edges 12 is fixed to the flange 47 by at least three screws 48. To the face of the cutting tool 11 is applied a distributor 49 of cooling liquid, fixed to the flange 47 by screws 50. Through at least three openings 22 in the flange member 6 of the cutting part 7, axially deformable element 5, and adjusting plate 43, pass adjustably settable force means 23, which are for example traction screws 24, the thread seat of which is in the flange member 3 of the clamping part 1. It is advantageous to place spring washers 19 under the heads of the traction screws 24.

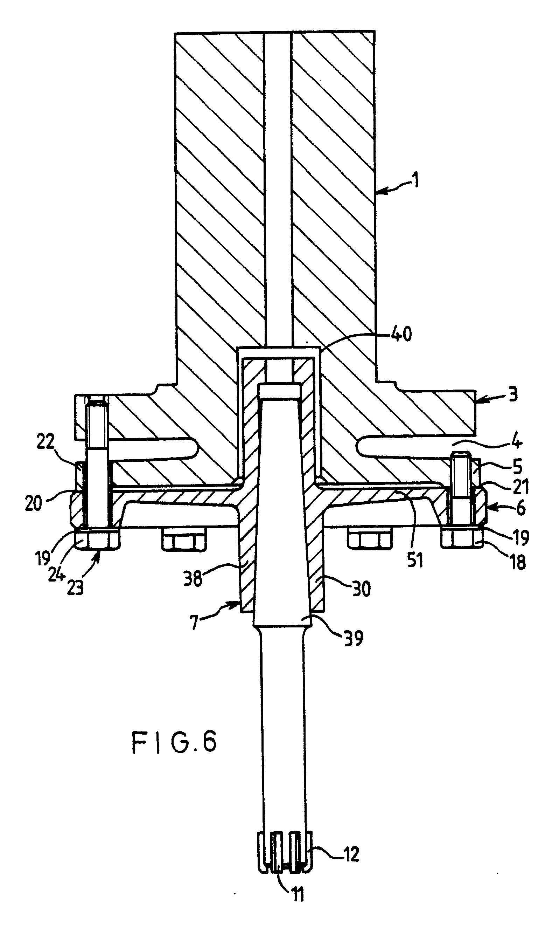

The embodiment illustrated in Figure 6 is a tool unit for turret NC lathes. The tool unit is fixed by a cylindrical clamping part 1 in a turret holder, while the end of the part 1 is formed as a flange member 3 with a circumferential recess 4; thus an adjustable axially deformable element 5 is created. A flange member 6 is fixed to the said element 5 by means of at least three screws 18 with spring washers 19. The flange member 6 is made as a flexible plate 51 from the centre of which protrudes to both sides a tool holder 30 in which there is a conical clamping cavity 38, in which there is received from one side a conical shank 39 of a cutting tool 11 with cutting edges 12. The other end of the tool holder 30, which passes through the centre of the axially deformable element 5, is freely located in a centering opening 40 in the centre of the flange member 3 of the clamping part 1. At the contact interface 20 of the axially deformable element 5 with the flange member 6 (advantageously on the element 5) there is a circumferential protrusion 21. The flange member 6 is provided on its circumference with at least three openings 22 passing through the axially deformable element 5, in which openings are arranged adjustably settable force means 23; in this exemplary embodiment they are traction screws 24 whose thread seats are in the flange member 3 of clamping part 1. It is advantageous to place spring washers 19 under the heads of the traction screws 24.

The embodiments according to Figures 1 to 4 are especially suitable for machine tools with rotating cutting tools 11, where the tool units are clamped in the clamping cavity of the spindle. The tool unit of Figure 1, after attachment of the cutting part 7 with the flange member 6 to the axially deformable element 5 by means of the screws 18 is put by the clamping cone 2 into a jig or directly into the spindle of a machine tool, and by means of a dial indicator placed on the measuring surface 25 this surface 25 is aligned to radial run-out by knocking on the flange member 6, and the mutual position of the clamping part 1 and cutting part 7 is fixed by means of the screws 18, while correct tightening moment is indicated for example by the spring washers 19, or it is possible to use a torque wrench. After this basic adjustment the dial indicator is set to relative dimension of the cutting part 7 usually directly on the cutting edges 12 of the cutting tool 11. Before actual adjustment by the adjustably settable force means 23, in this case by traction screws 24, they are first adjusted to a minimum moment which equals minimum tightening moment limited by the prestress of the traction screw 24 excluding spontaneous releasing within variable machining forces. After measurement of radial run-out any deflection is eliminated by tightening the traction screws 24; maximum moment given by maximum flexible deformation of traction screw 24 or axially deformable element 5 must not be surpassed. In case of necessity to regulate the rigidity of adjustment of the cutting tool 11, necessary rigidity is adjusted by means of the adjustably settable force means 23, for example traction screws 24.

The embodiment according to Figure 1 enables one further to adjust axial run-out of the cutting tool 11, in case of necessity to correct such run-out within a larger extent than possible by new adjustment of traction screws 24, it is possible to adjust radial deviation in clamping the cutting part 7 by the screws 18, which will be eliminated after new adjustment of run-out of cutting edges 12 of the cutting tool 11. Change of the cutting tool overhang is possible also, for example by adding washers (not shown) on the contact surface 20, such washers having the size of circumferential protrusion 21, or by the exchange of the cutting part 7. By the selection of the tool unit, where the traction screws 24 are under the angle increasing from the axis of the tool unit, effect on radial component in cutting tool 11 increases, too.

The embodiment in Figure 2 simplifies the assembly of the whole tool unit and it is suitable especially to clamp large diameter cutting tools 11 with a small overhang, when it is necessary to adjust suitably the rigidity and to adjust axially the cutting edges 12. Basic adjustment is carried out by putting the positioning of the opening 26 of the cutting tool all on the fixing pin 16, where it is fixed by means of the screws 18 to the axially deformable element 5. By tightening the traction screws 24 required axial run-out is adjusted, such run-out advantageously being measured on the cutting edges 12 or in their vicinity, as described above.

The tool unit illustrated in Figure 3 is suitable first of all to clamp a cutting tool 11 with a cylindrical shank 32. Cutting tool 11 is clamped into cylindrical clamping cavity 31 of the tool holder 30 and it is adjusted by means of adjusting surface 33 on cylindrical shank 32 by means of adjusting screws 34 so that a cutting edge 12 of the cutting tool 11 is always transverse to a traction screw 24, which enables one to adjust radial run-out by means of a dial indicator on the cutting edge 12 or in its vicinity. Basic adjustment of the clamping part 1 with regard to the cutting part 7 constituted by the flange member 6, which is at the same time the axially deformable element 5, is performed by putting the centering pin 29 into the centering opening 28. By screwing the traction screws 24 with spring washers 19 into the clamping part 1 and by adjusting minimum moment, the tool unit is ready to be adjusted advantageously so that the traction screw 24 is always tightened transversely with regard to the cutting edge 12 with measured maximum radial deviation, up to maximum moment. After reaching said moment it is necessary to slacken the screws to minimum moment and to adjust again.

The tool unit in Figure 4 is assembled so that into the centering opening 28 in clamping part 1 of the tool unit is pushed the centering pin 29, onto which is previously pulled a spring washer 36, which is advantageously a Belleville spring 37, which by its internal part leans against the flange member 3 and by its outer part against the flange member 6. After pushing the traction screws 24 into the screw openings 22 and after their tightening on minimum moment, basic adjustment is finished and during actual adjustment of the cutting tool by adjustment of minimum radial deviation measured advantageously on the cutting edges 12, proceed as described above.

The tool unit in Figure 5 is used for example in the turrets of turret NC lathes, where the adjustment is done directly in the machine. After insertion of the clamping part 1 into the turret, the adjusting plate 43 is put on the flange member 3, plate 43 is slightly tightened by means of fixing screws 44 and its centering opening 28 is radially aligned with the chuck of the turret lathe by means of centering screws 41 bearing against centering projection 42 and then the fixing screws 44 are locked. After this basic adjustment, the centering pin 29, which is on the front of axially deformable element 5, is pushed into the centering opening 28 together with driving pin 45 and flange member 6, and the whole assembly is fixed, by means of the adjustably, settable force means 23 (traction screws 24) to the flange member 3. After adjustment of minimum moment on traction screws 24 they are adjusted in the above described way by their tightening up to maximum moment. In case of necessity to align radial run-out, the adjusting plate 43 is adjusted to a certain run-out by means of centering screws 41 leaning against the centering projection 42 and after tightening the fixing screws 44, the adjusting plate 43 is again tightly fixed to the flange member 3. Further adjustment of radial and eventually axial run-out is performed in the above described way.

The tool unit in Figure 6 is used like the embodiment according to Figure 5 usually in the turrets of turret NC lathes, where the adjustment is done directly in the machine. After insertion of the clamping part 1 into the turret, the flange member 6 constituted by the flexible plate 51 is put on the axially deformable element 5 and it is slightly secured by the screws 18. By knocking on the circumference of the flange member 6 this member 6 is centered with regard to the chucks of the turret lathe and it is fixed by tightening the screws 18. Traction screws 24 with spring washers 19 are pushed through screw openings 22 and their minimum moment is adjusted. The conical shank 39 of the cutting tool 11 with cutting edges 12 is then inserted into the conical clamping cavity 38, the dial indicator is set on the cutting edges 12 and radial, eventually axial run-out is measured and cutting edges 12 are adjusted by tightening the traction screws 24 in the above described way. Flexibility of the tool unit when the cutting tool 11 enters into the machined opening can be controlled by adjustment of the screws 18 and the traction screws 24.

The tool unit of the above-described embodiments can be used in all types of precise machine tools to clamp the cutting tools, for example face reamers, reamer drills, precise plain milling cutters, and face milling cutters, eventually also drilling tools.

## Claims

1. A tool unit, in particular for finishing operations of cutting machining, comprising a clamping part (1) for driving connection with a machine tool and a cutting part (7) including a cutting tool (11) with at least three cutting edges (12) distributed around a circle, the cutting part (7) being adjustably swingable relative to the clamping part (1), characterised in that in a transition zone between the clamping part (1) and the cutting part (7) there is an adjustably axially deformable element (5), and the axial distance between the clamping part (1) and the cutting part (7) in at least three places around their circumference is adjustably settable by force means (23).

2. A tool unit as claimed in claim 1, in which in the transition zone, the clamping part (1) and the cutting part (7) are provided with respective flange members (3,6).

3. A tool unit as claimed in claim 2, in which at least one flange member (3,6) is provided with a circumferential recess (4).

4. A tool unit as claimed in claim 2 or 3, in which at least one flange member (3,6) is provided with a face recess (27).

5. A tool unit as claimed in any preceding claim, in which the force means (23) comprise adjusting screws (24).

6. A tool unit as claimed in any preceding claim, in which, in the transition zone, between the clamping part (1) and the cutting part (7) is arranged a spring washer (36) as an axially deformable element (5), for example a Belleville spring (37), the said parts (1,7) being connected by traction means (24).

7. A tool unit as claimed in any preceding claim, in which one of the said parts (1,7) has a face with a centering opening (28) for location of a centering element (29) arranged on the other of the said parts (1,7).

8. A tool unit as claimed in any preceding claim, in which the axially deformable element (5) is provided on one of the said parts (1,7) and bears on an adjusting plate (43) which is radially adjustable and axially fixed on the other of the said parts (1,7).

9. A tool unit according to any preceding claim, in which one of the said parts (1,7) comprises a flexible plate (51) connected at its circumference with an axially deformable element (5) arranged radially fixed with regard to the other of the said parts (1,7).

FIG.1

FIG.2

FIG.3

FIG.4

FIG.5

EP 0 418 041 A2

10

FIG.6